# EUROPEAN PATENT APPLICATION

(11) **EP 3 141 999 A1**
(43) Date of publication of application: **15.03.2017**
(21) Application number: 16186954.0
(22) Date of filing: 02.09.2016
(51) Int. Cl.: G06F 3/12, G06K 15/02

(54) **A PRINTING SYSTEM COMPRISING A RASTER IMAGE PROCESSOR UNIT AND A METHOD FOR PRINTING BY MEANS OF SAID PRINTING SYSTEM**

(30) Priority: 08.09.2015 EP 15184340
(71) Applicant: OCE-Technologies B.V., 5914 CA Venlo (NL)
(72) Inventor: GERRITS, Antonius Maria, 5914 CA VENLO (NL)
(74) Representative: OCE IP Department

(57) **Abstract**

The invention relates to a printing system for printing a print job, the printing system comprising a receiving unit, a control unit, a raster image processor unit, a print unit and a user interface unit, wherein the receiving unit configured to receive the print job, the raster image processor unit configured to rasterize the print job according to predetermined raster image processor settings, the print unit configured to print the rasterized print job, the control unit configured to control the rastering process of the print job and the printing process of the rasterized print job, and the user interface unit for communication between a user of the printing system and the control unit, wherein the control unit comprises an analyzing unit configured to analyse properties of print data of the print job, and a comparing unit configured to compare the properties of the analysed print data with the predetermined raster image processor settings, wherein, upon detection of a discrepancy between the properties and the predetermined raster image processor settings by the comparing unit, the control unit notifies the user of the printing system of said discrepancy for taking an action for whether or not solving the detected discrepancy.

The invention also relates to a method suitable for application in the printing system.

## Description

### Field of the invention

The invention relates to a printing system for printing a print job, the printing system comprising a receiving unit, a control unit, a raster image processor unit, a print unit and a user interface unit, wherein the receiving unit is configured to receive the print job, the raster image processor unit is configured to rasterize the print job according to predetermined raster image processor settings, the print unit is configured to print the rasterized print job, the control unit is configured to control the rastering process of the print job and the printing process of the rasterized print job, and the user interface unit is configured to communicate between a user of the printing system and the control unit.

By the term printing system a system is meant that has a print function, for example a printer, a copier, a multi-functional, a roll-to-roll printer, a roll-to-sheet printer, a cut sheet printer, a flatbed printer, a wide-format printer, a relief printer or a 3D printer.

By the term raster image processor unit is meant a unit comprising a raster image processor which produces a raster image also known as a bitmap. Such a bitmap is used by later stage of the printing system in the print unit to produce the printed output. The input may be a page description in a high-level page description language such as PostScript, Portable Document Format, XPS or another bitmap of higher or lower resolution than the print unit. In the latter case, the raster image processor applies either smoothing or interpolation algorithms to the input bitmap to generate the output bitmap.

The term raster image processor will also be abbreviated with RIP. The process executed by the raster image processor is also mentioned as "ripping".

The present invention further relates to a method which is applicable in a printing system according to the invention.

### Background of the invention

Nowadays, a print job with print data is submitted to the receiving unit of the printing system with print job settings also known as print job properties. The raster image processor is configured according to predetermined raster image processor settings for ripping the print data.

The raster image processor may also be used to enable printing of a colour document on a black and white printer and to enable printing of a black and white document on a colour printer.

Pre-flight tools are known which give information about the page description language input of a print job but are not aware of any predetermined raster image processing setting in the printing system. A predetermined raster image processor setting may be a setting for switching on or off of a specific functionality of the raster image processor. A discrepancy between the properties of the print job and predetermined raster image processor settings may lead to incorrect print output. For example, if a setting for switching on or off a specific functionality of the raster image processor is switched off while from the print data it has to be concluded that this functionality should be used while ripping an input document. For example, if a setting for switching on or off a specific functionality of the raster image processor is switched off while from the print data it has to be concluded that this functionality is preferably to be used while ripping an input document.

An object of the present invention is to provide a printing system in which incorrect print output due to such a discrepancy is avoided.

### Summary of the invention

The object is achieved in a printing system of the above-mentioned kind, wherein wherein the control unit comprises an analyzing unit configured to analyse properties of print data of the print job, and a comparing unit configured to compare the properties of the analysed print data with the predetermined raster image processor settings, wherein, upon detection of a discrepancy between the properties and the predetermined raster image processor settings by the comparing unit, the control unit notifies the user of the printing system of said discrepancy for taking an action for whether or not solving the detected discrepancy. Both the print data knowledge and the raster image processor settings are combined in one place and the notification is given without a need for separate print job settings or separate print job settings that may aid to detect a suspect combination.

According to an embodiment a predetermined raster image processor setting is a setting for switching on or off of a specific functionality of the raster image processor. Such specific functionality may be spot color matching, transparency support also known as overprint support, printing black and white, etc.

According to an embodiment the control unit is configured in case of a detected discrepancy between the properties and the predetermined raster image processor settings to prohibit or at least to postpone the printing of the print job by the print unit. The user interface of the printing system may show a print queue of scheduled print jobs. When a print job with a detected discrepancy arrives at the top of the print queue for printing, the control unit may automatically stop the printing by the print unit. By doing so the print job is prevented from being printed with incorrect settings.
The detection of the discrepancy may be indicated by a digital information item to be displayed near the print job in the displayed print queue at the user interface. Also an operator may select a print job from the print queue, which print job is accompanied by the digital information item, before the print job reaches the top of the print queue. By selecting the print job in this way, the operator implicitly puts the print job on hold for solving the discrepancy.

According to an embodiment the action for whether or not solving the detected discrepancy is selected out of changing at least one predetermined raster image processor setting, editing the print data of the print job, and confirming to proceed with the current print data of the print job as well as the predetermined raster image processor settings.

According to an embodiment the control unit is configured to apply the further dedicated action to print jobs subsequent to the print job on request of the user by means of the user interface.

According to an embodiment the discrepancy is detected between the properties of the print job and a predetermined raster image processor setting for switching on or off a specific functionality of the raster image processor unit which setting is switched off while the analyzing unit concludes from the print data of the print job that the specific functionality is necessarily to be used while ripping the print data of the print job. The specific functionality is considered to be necessarily to be used while ripping the print data of the print job if the print job cannot be printed without the specific functionality. The specific functionality is considered to be relevant to be used while ripping the print data of the print job if the specific functionality influences the output of the print job, for example if certain color objects in the print data are treated differently in color management of the RIP and these kind of color objects are present in the print job.

According to an embodiment the discrepancy is detected between the properties of the print job and a predetermined raster image processor setting for switching on or off a specific functionality of the raster image processor unit which setting is switched on while the analyzing unit concludes from the print data of the print job that the specific functionality must not be used while ripping the print data of the print job.

According to an embodiment the discrepancy is detected between the properties and a raster image processor setting out of a raster image processor setting for switching between enabling and disabling spot color matching, a raster image processor setting for switching between enabling and disabling overprint support, a raster image processor setting to a spot color which is not present in a spot color library of the control unit, and a raster image processor setting for switching between color printing and black and white printing. A discrepancy may occur in a situation that spot color matching is on but the spot colors in the print data to match are not present in a spot color library on the raster image processor. A discrepancy may occur in a situation that spot color matching is off but at least one spot color is present in the print data which at least one spot color is also present in the spot color library on the raster image processor. A discrepancy may occur in a situation that spot color matching is on but the print data contains no spot colors. It may also occur that there is a spot color present in the print data which spot color is not present in the spot color library on the raster image processor while spot color matching is off. A warning may be issued that there is an unknown spot color present in the print data.

According to an embodiment the user interface unit is configured to display a print job properties window, and upon a change of a print job property on the print job property window, the comparing unit and the analyzing unit are configured to detect a discrepancy between the changed print job property and the raster image processor settings.

According to an embodiment the printing system comprises a prepress application unit, and the control unit is configured to communicate the predetermined raster image processor settings to the prepress application unit and the prepress application unit is configured to detect a discrepancy between the predetermined raster image processing settings and print data of a print job received by the prepress application running on the prepress application unit.

The invention further relates to a method for printing a print job by a printing system, the method comprising the steps of receiving the print job at the printing system, rasterizing the print job according to predetermined raster image processor settings, and printing the rasterized print job, wherein the method further comprises the steps of analyzing properties of print data of the print job, comparing the properties of the analysed print data with the predetermined raster image processor, detecting a discrepancy between the properties and the predetermined raster image processor settings by the comparing unit, and notifying a user of the printing system of said discrepancy for taking an action for whether or not solving the detected discrepancy.
According to an embodiment of the method the discrepancy is detected between the properties and a raster image processor setting out of a raster image processor setting for switching between enabling and disabling spot color matching, a raster image processor setting for switching between enabling and disabling overprint support, a raster image processor setting for spot color matching while a spot color in the print data is not present in a spot color library of the control unit, and a raster image processor setting for switching between color printing and black and white printing.

The invention also relates to a computer-program product embodied on a non-transitory computer readable medium and configured to execute a method according to the invention when executed on a processor.

The invention also relates to a non-transitory data carrier having stored thereon the computer-program product mentioned here-above.

### Brief descriptions of the drawings

Embodiment examples will now be described in conjunction with the drawings, wherein:
- Fig. 1: is a block diagram of a printing system according to the invention;
- Fig. 2: illustrates a user interface window of the printing system showing a print queue of submitted print jobs according to the invention;
- Fig. 3: illustrates a user interface window of the printing system showing print job properties of a print job selected from the print queue;
- Fig. 4: illustrates a user interface window of the printing system showing system settings including settings for the RIP unit according to the invention;
- Fig. 5: illustrates a user interface window of the printing system showing the print queue with an user operable digital item regarding a detected discrepancy according to the invention;
- Fig. 6: illustrates a user interface window of the printing system showing a message regarding a detected discrepancy according to the invention for the user of the printing system; and
- Fig. 7: is a flow diagram of an embodiment of the method according to the invention.

### Detailed description of the embodiments

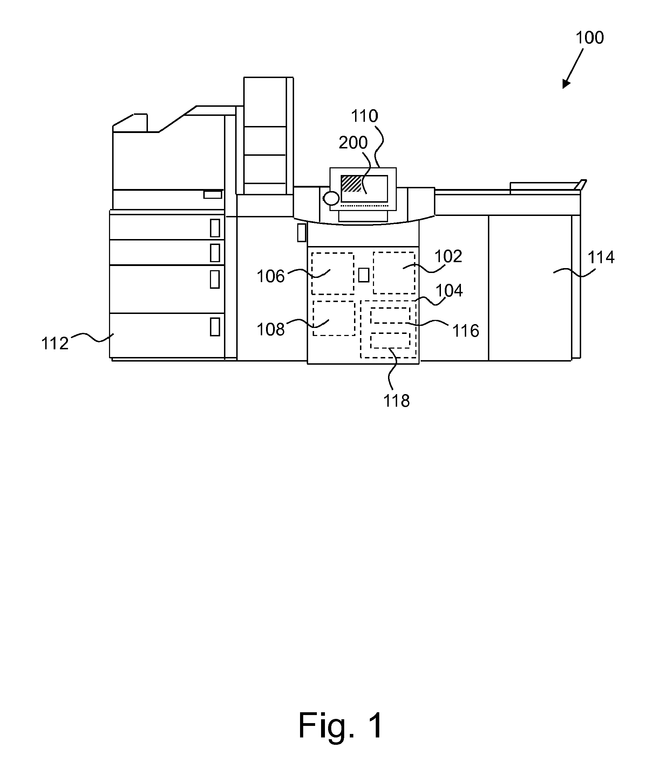

As an illustrative example, Fig. 1 shows schematically a printing system 100 for printing a print job. The printing system 100 comprises a receiving unit 102, a control unit 104, a raster image processor unit 106, a print unit 108 and a user interface unit 110.
The various parts of the printing system 100 are controlled by the control unit 104, directly or through the agency of sub-control modules 102, 106, 108, 116, 118, 110. The receiving unit 102, the raster image processor unit 106 and the print unit 108 are connected to the control unit 104, which is also connected to the user interface unit 110 provided with user interface window 200 with operator control elements and a display element, for example an LCD screen in the form of a touch screen for use by an operator at the printing system 100.

When a print job is received by the receiving unit 102, the received print job is processed by the raster image processor unit 106. The raster image processor unit 106 is configured to rasterize the print job according to predetermined raster image processor settings. When the print job is rasterized into a bitmap, the bitmap is positioned in a digital print queue of scheduled print jobs to be printed. When the bitmap arrives at the head of the print queue, the bitmap will be printed by the print unit 108. The print job will be printed on media loaded in one of the input trays 112. The media is guided along a paper path (not shown) to the print unit 108. After the bitmap is printed on the media, the printed media is guided to an output tray 114. The control unit 104 is configured to control the rastering process of the print job and the printing process of the rasterized print job. The user interface unit 110, e.g. a digital work station, is configured to communicate between a user of the printing system 100 and the control unit 104. The control unit 104 comprises an analyzing unit 116 configured to analyse properties of print data of the print job, and a comparing unit 118 configured to compare the properties of the analysed print data with the predetermined raster image processor settings.

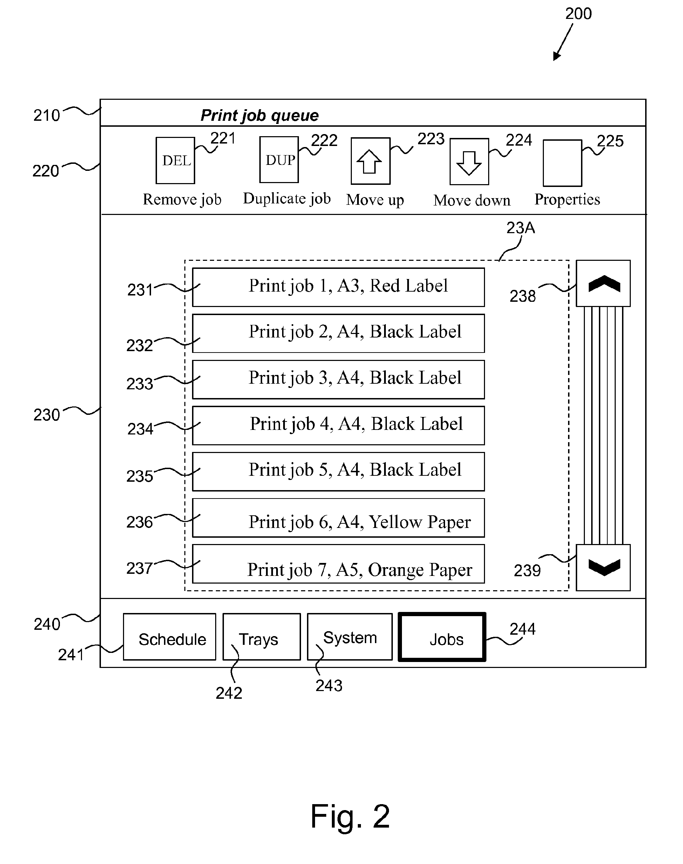

The user interface 110 has a control panel with a display e.g. in the form of a touch-sensitive screen which, in this example, shows a user interface window 200. The user interface window 200 is shown in detail in Fig. 2.

Fig. 2 shows the user interface window 200 of the printing system 100 according to the invention. In an alternative embodiment part of the functionality - like buttons - of this user interface window is designed as hardware buttons near the user interface window 200. The user interface window 200 is opened at the user interface unit 110 in Fig. 1 and shows a representation of the print queue residing in the control unit 104 in Fig. 1.

The user interface window 200 comprises a title section 210, a user action section 220, a print queue section 230 and a navigation section 240.

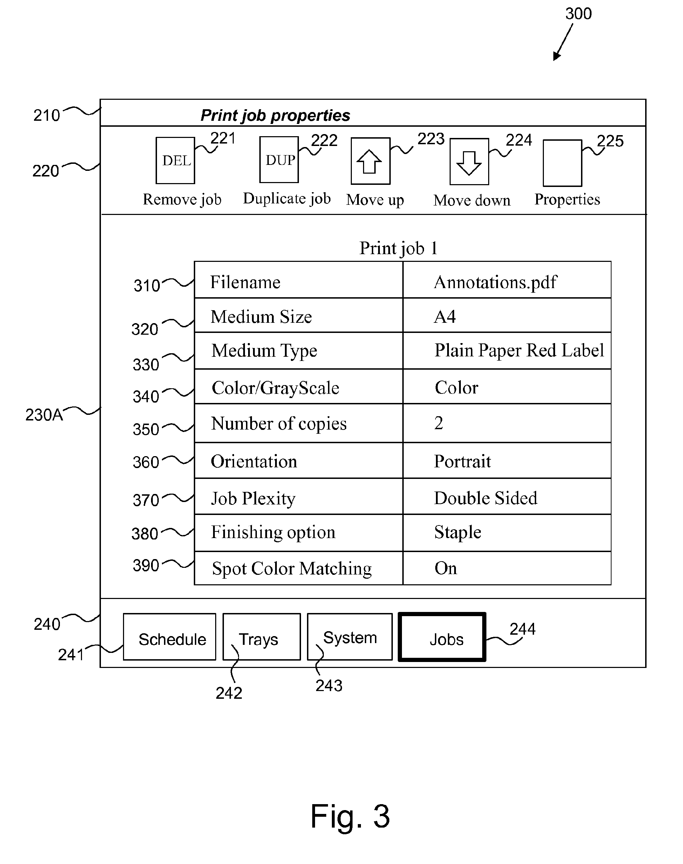

The user action section 220 comprises user operable items 221 - 225 to be selected for executing actions on one or more selected print jobs in the print queue 23A in the print queue section 230.
A first user operable item 221 represents a job removal action.
A second user operable item 222 represents a job duplication action.
A third user operable item 223 represents a move up action.
A fourth user operable item 224 represents a move down action.
A fifth user operable item 225 represents an action to retrieve and display properties and settings of a selected print job in a properties window as shown in Fig. 3.

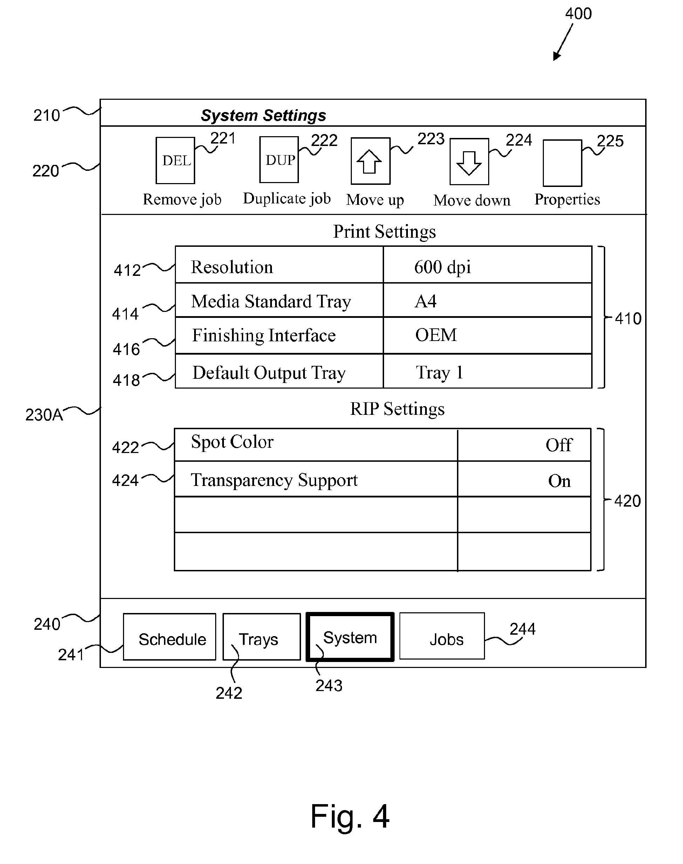

The navigation section 240 comprises a first user operable item 241 for navigating to a schedule with a timeline and media needed for the print jobs, a second user operable item 242 for navigating to an overview of the input trays 112 (See Fig. 1) and the content of the input trays, a third user operable item 243 for navigating to the system settings shown in Fig. 4, and a fourth user operable item 244 for navigating to the print jobs in the print queue 23A.

The print queue section 230 comprises a representation of the print queue 23A. The print queue 23A may be empty or comprises at least one print job. Fig. 2 shows a plurality of print jobs 231 - 237 in the print queue 23A in a sequence order from top to bottom. A first print job 231 will be printed real soon after the current print job (not shown) that is currently printed by the printing device is ready. A last print job 237 will be printed if the preceding print jobs 231 - 236 are ready. Each print job 231 - 237 in the print queue 23A is selectable by a mouse or by a finger or stylus in case of a touch screen. A sequence order of the print jobs 231 - 237 in the print queue 23A may be changed by selecting a print job in the print queue 23A and then activating the third user operable item 223 or the fourth user operable item 224 in order to move the selected print job one position up or down respectively in the print queue 23A. In a further embodiment in case of a touch screen a position of a print job 231 - 237 in the print queue 23A may be changed by dragging and dropping the appropriate print job to another position in the print queue. The print queue 23A is scrollable by activating an upward scrolling button 238 or a downward scrolling button 239. Each print job 231 - 237 in the print queue 23A may be displayed with a number of properties of the print job, such as an identifying name of the print job ("Print job 1 "), a size of the image receiving material to be used for the print job ("A3"), the medium type of the image receiving material ("Red Label"), etc. For convenience reasons a small relevant number of properties for each print job 231 - 237 is displayed in the print queue 23A.

Fig. 3 illustrates a display window 300 of a user interface of the printing system showing the print job properties and settings of print job 231 (See Fig. 2) after selecting the first print job 231 and activating the fifth user operable item 225 (See Fig. 2).

The print job properties and settings comprise a file name 310, a medium size 320, a medium type 330, a color / grayscale indication 340, a number of copies 350, an orientation 360 (portrait / landscape), a print job plexity indication 370 (single sided / double sided), a finishing option 380 like Staple, Binding, etc, and a spot color matching indication 390.

The file name 310 has an extension ".pdf" which indicates that the print data has a portable document format. The print data of the pdf file 310 comprises spot colors. The analyzing unit 116 (See Fig. 1) configured to analyse properties of print data of the print job analyses the print data and - for example - retrieves spot color use from the print data. For example, spot colors A, B, C are found to be used in case of printing the pdf file 310.

According to Fig. 3 the spot color matching is set to "on" for the print job. The spot color matching indication 390 in the print job properties may overrule a system setting for spot color matching. If the user is editing the setting of spot color matching from "on" to "off" and the analyzing unit concludes that the print data contains a spot color to be matched, the user interface window may show a pop up window for warning the user for this discrepancy.

Fig. 4 illustrates a display window 400 of a user interface of the printing system showing the system settings of the printing system 100 after selecting the third user operable item 243 (See also Fig. 2).
A first part 410 of the system settings are print settings for the print unit of the printing system, like a resolution setting 412, a setting 414 for media in a standard tray of the printing system, a finishing interface setting 416 and a default output tray 418
A second part 420 of the system settings are the raster image processor settings 410 according to the invention which are predetermined for the raster image processor unit 106 (See Fig. 1). Hereinafter the term "raster image processor" will be abbreviated to RIP.

A first RIP setting 422 is a switch setting named "spot color on/off".
If a value of the first RIP setting 422 is equal to "spot color on" spot colors will be searched for in the print data. Each found spot color in the print data will be mapped to spot color set in a library of spot colors in the control unit 104 of the printing system 100. If a value of the first RIP setting 422 is equal to "spot color off' spot colors will not be searched for in the print data. Each spot color in the print data will be regularly printed as an approximating RGB / CMYK color value.
According to an embodiment of the printing system, the printing system has a so-called "spot color not present strategy".
In a spot color not present strategy spot colors are searched for in the print data and in case a spot color is detected in the print data which is not present in the spot color library in the control unit 104 of the printing system 100, a "spot color not present" strategy will be executed. A "spot color not present" strategy may be:
1. continue without spot color matching,
2. continue without spot color matching only for the spot color which is not present, or
3. add spot color to the spot color library and continue.

In another spot color not present strategy spot colors are searched for in the print data and in case a spot color is detected in the print data which is not present in a spot color library in the control unit 104 of the printing system 100, no "spot color not present" strategy will be executed. An alternative approximating color will be printed instead of the detected spot color which is not present in the library for spot colors in the control unit 104.

A second RIP setting 424 is a switch setting named "transparency support on/off". If a value of the second RIP setting 424 is equal to "transparency support on" parts of the print data specified to be printed in an overprint mode will be searched for in the print data and will be taken into account by mixing a color according to a mixing recipe while ripping the print data. The mixing recipe depends on the amount of transparency. If a value of the second RIP setting 424 is equal to "transparency support off" parts of the print data specified to be printed in an overprint mode will not be searched for in the print data and will not be taken into account by ignoring colors underneath a top color while ripping the print data.

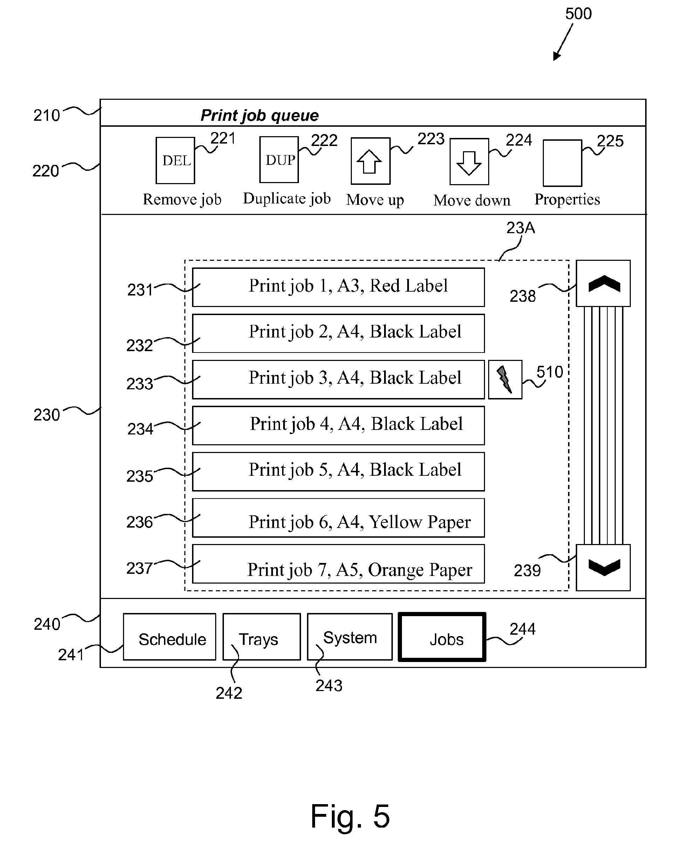

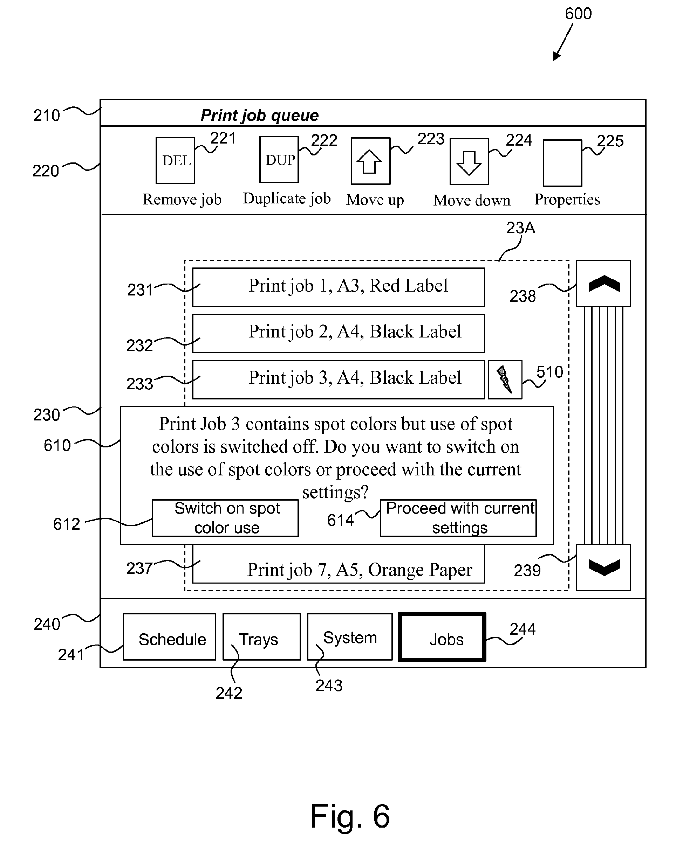

The comparing unit 118 compares the predetermined RIP settings with the analyzed properties and content of the print data of a print job.
If a discrepancy is detected by the comparing unit, the user is notified by a warning icon shown in user interface window 500 shown in Fig. 5. The warning icon 510 is positioned near the job entry of the appropriate print job. The warning icon 510 may be activated for further information as shown in Fig. 6.

Fig.6 shows user interface window 600 displaying a message 610 for the user of the printing system that a discrepancy is detected between the print data of the print job 233 and the RIP settings of the RIP unit 106. In this example, the value of the first RIP setting 422 in Fig. 4 is equal to "Spot color off" while the print data of print job 233 actually contains at least one spot color. The user is asked if he wants to switch on the use of spot colors or to proceed with the current settings. If the user decides to switch on the use of spot colors, he may activate a first button 612 and the first RIP setting 422 will be set to "Spot color on". If the user decides not to switch on the use of spot colors, he may activate a second button 614 and the value of the first RIP setting 422 will remain the same ("spot color off").

Other kind of user operable digital objects may be envisioned on the respective user interface windows shown in Fig. 2 - 6.

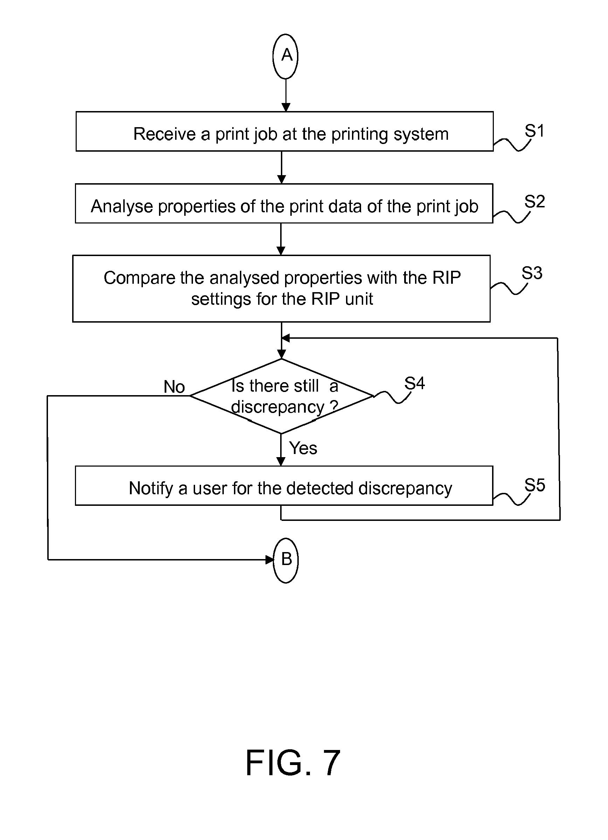

An embodiment of the method according to the invention is explained in Fig. 7. A starting point A in Fig. 7 leads to a first step S1.

In the first step S1 a print job is received at the printing system. The receiving unit of the printing system is configured to receive the print job and store it in storage of the printing system.
In a second step S2 properties of print data of the print job are analysed. The analysing unit residing in the control unit is configured to analyse the print data and its properties.

In a third step S3 the properties of the analysed print data are compared with the predetermined RIP settings. The comparing unit residing in the control unit is configured to compare the predetermined RIP settings with the analysed print data.

In a fourth step S4 it is checked by the comparing unit if there is a discrepancy between the properties and the predetermined RIP settings. If so, the method proceeds to a fifth step S5. Otherwise the method ends in an end point B.

In the fifth step S5 a user of the printing system is notified for the detected discrepancy by means of the user interface.
The discrepancy may be detected between the properties of the print job and a predetermined RIP setting for switching on or off a specific functionality of the RIP unit which setting is switched off while the analyzing unit concludes from the print data of the print job that the specific functionality is necessarily to be used while ripping the print data of the print job.
The discrepancy may be detected between the properties of the print job and a predetermined RIP setting for switching on or off a specific functionality of the RIP unit which setting is switched on while the analyzing unit concludes from the print data of the print job that the specific functionality is not necessarily to be used while ripping the print data of the print job.
The detected discrepancy between the properties and a RIP setting may concern a RIP setting for switching between enabling and disabling spot color matching, a RIP setting for switching between enabling and disabling a transparency support also known as overprint functionality, a RIP setting having set to spot color matching "on" while the spot colors to match are not present in a spot color library of the control unit, and/or a RIP setting for switching between color printing and black and white printing.
The user may take an action for whether or not solving the detected discrepancy. The action may be an action to change at least one predetermined raster image processor setting, an action to edit the print data of the print job, or an action to confirm to proceed with the current print data of the print job as well as with the predetermined raster image processor settings.

After the fifth step S5 the method returns to the fourth step S4 in order to check for more detected discrepancies.

The method ends in the end point B.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

## Claims

1. Printing system for printing a print job, the printing system comprising a receiving unit, a control unit, a raster image processor unit, a print unit and a user interface unit, wherein
the receiving unit configured to receive the print job,
the raster image processor unit configured to rasterize the print job according to predetermined raster image processor settings for switching on or off of a specific functionality of the raster image processor unit,
the print unit configured to print the rasterized print job,
the control unit configured to control the rastering process of the print job and the printing process of the rasterized print job, and
the user interface unit configured to communicate between a user of the printing system and the control unit,
wherein
the control unit comprises
an analyzing unit configured to analyse properties of print data of the print job, and
a comparing unit configured to compare the properties of the analysed print data with the predetermined raster image processor settings,
wherein,
upon detection of a discrepancy between the properties and the predetermined raster image processor settings by the comparing unit, the control unit notifies the user of the printing system of said discrepancy for taking an action for whether or not solving the detected discrepancy.

2. Printing system according to any of the preceding claims, wherein the control unit is configured in case of a detected discrepancy between the properties and the predetermined raster image processor settings to prohibit or at least to postpone the printing of the print job by the print unit.

3. Printing system according to any of the preceding claims, wherein the action for whether or not solving the detected discrepancy is selected out of changing at least one predetermined raster image processor setting, editing the print data of the print job, and confirming to proceed with the current print data of the print job as well as the predetermined raster image processor settings.

4. Printing system according to any of the preceding claims, wherein the control unit is configured to apply the action to print jobs subsequent to the print job on request of the user by means of the user interface.

5. Printing system according to any of the preceding claims, wherein the discrepancy is detected between the properties of the print job and a predetermined raster image processor setting for switching on or off a specific functionality of the raster image processor unit which setting is switched off while the analyzing unit concludes from the print data of the print job that the specific functionality is necessarily to be used while ripping the print data of the print job.

6. Printing system according to any of the preceding claims, wherein the discrepancy is detected between the properties of the print job and a predetermined raster image processor setting for switching on or off a specific functionality of the raster image processor unit which setting is switched on while the analyzing unit concludes from the print data of the print job that the specific functionality must not be used while ripping the print data of the print job.

7. Printing system according to any of the preceding claims, wherein the discrepancy is detected between the properties and a raster image processor setting out of a raster image processor setting for switching between enabling and disabling spot color matching, a raster image processor setting for switching between enabling and disabling an overprint support, a raster image processor setting to a spot color which is not present in a spot color library of the control unit, and a raster image processor setting for switching between color printing and black and white printing.

8. Printing system according to any of the preceding claims, wherein the user interface unit is configured to display a print job properties window, and upon a change of a print job property on the print job property window, the comparing unit and the analyzing unit are configured to detect a discrepancy between the changed print job property and the raster image processor settings.

9. Printing system according to any of the preceding claims, wherein printing system comprises a prepress application unit, and the control unit is configured to communicate the predetermined raster image processor settings to the prepress application unit and the prepress application unit is configured to detect a discrepancy between the predetermined raster image processing settings and print data of a print job received by the prepress application running on the prepress application unit.

10. Method for printing a print job by a printing system, the method comprising the steps of
- receiving the print job at the printing system,
- rasterizing the print job according to predetermined raster image processor settings for switching on or off of a specific functionality of a raster image processor unit, and
- printing the rasterized print job by the raster image processor unit,
wherein
the method further comprises the steps of
analyzing properties of print data of the print job,
comparing the properties of the analysed print data with the predetermined raster image processor settings,
detecting a discrepancy between the properties and the predetermined raster image processor settings by the comparing unit, and
notifying a user of the printing system of said discrepancy for taking an action for whether or not solving the detected discrepancy.

11. Method according to claim 10, wherein the discrepancy is detected between the properties and a raster image processor setting out of a raster image processor setting for switching between enabling and disabling spot color matching, a raster image processor setting for switching between enabling and disabling overprint support, a raster image processor setting for spot color matching while a spot color present in the print data is not present in a spot color library of the control unit, and a raster image processor setting for switching between color printing and black and white printing.

12. Computer-program product embodied on a non-transitory computer readable medium and configured to execute a method according to any of claims 10 - 11 when executed on a processor.

13. A non-transitory data carrier having stored thereon the computer-program product according to claim 12.
